# EUROPEAN PATENT APPLICATION

(11) **EP 4 215 776 A1**
(43) Date of publication of application: **26.07.2023**
(21) Application number: 22152766.6
(22) Date of filing: 21.01.2022
(51) Int. Cl.: F16F 1/38

(54) **BUSHING FOR AN ANTI-VIBRATION BRACKET, ANTI-VIBRATION BRACKET, AND METHODS OF MANUFACTURING AN ANTI-VIBRATION BRACKET**

(71) Applicant: Vibracoustic SE, 64293 Darmstadt (DE)
(72) Inventor: CHAUVET, Ludovic, 44470 Mauves sur Loire (FR); COUCOUREUX, Vincent, 44470 Carquefou (FR); LE CORRE, Vincent, 44141 Le Bignon (FR)
(74) Representative: Patentanwälte Olbricht Buchhold Keulertz

(57) **Abstract**

Described is a bushing (6) for an anti-vibration bracket (2), the bushing (6) comprising an outer structure (22) and an inner sleeve (16), wherein the outer structure (22) comprises a connecting structure (21), wherein the connecting structure (21) comprises at least two blades (20) connected to the inner sleeve (16), and wherein the outer structure (22) is designed to connect to an opening (8) of the anti-vibration bracket (2), wherein the inner sleeve (16) comprises a through hole (30) adapted to connect to an at least partially tube-shaped member (18), wherein the at least two blades (20) have a helically extending structure relative to an axis (x) of the through hole (30).

## Description

The invention relates to a bushing for an anti-vibration bracket, an anti-vibration bracket, and methods of manufacturing an anti-vibration bracket.

Bushings for anti-vibration brackets, anti-vibration brackets, and methods of manufacturing anti-vibration brackets are generally known in the prior art.

Anti-vibration brackets are regularly used in automotive applications, e.g., as engine mounts. In recent years, the development of electric vehicles has made significant progress resulting in more and more electric vehicles on the streets. Electric motors for powering electric vehicles exhibit different ranges of vibration compared to common combustion engines. Consequently, means for supporting combustion engines cannot be employed for supporting electric motors while showing similar characteristics in respect to damping or absorption of vibrations. In particular, damping or absorbing vibrations generated by an electric motor cannot be reliably achieved with absorbers/ dampers for combustion engines. Consequently, new supports for electric motors were developed.

WO 2021/037919 A1 discloses a bracket for supporting an electric motor on a chassis of a vehicle, the bracket comprising a first half shell defining a first half space and a second half shell defining a second half space, wherein the first half shell and the second half shell are made from a plastic material, in particular a polymer material, wherein the first half shell and the second half shell are fixed to each other, preferably by welding, such that the first half shell and the second half shell define a cavity within the bracket including the first half space and the second half space. The bracket has a bushing made out of rubber material.

Automotive manufacturers and suppliers always strive to develop better, lighter, and more cost-efficient solutions. Conventional anti-vibration brackets are heavy and complicated to manufacture.

It is an object of the invention to provide a bushing for an anti-vibration bracket, and an anti-vibration bracket which are lighter and easier to manufacture and an easy method of manufacturing an anti-vibration bracket.

The object is solved by a bushing for an anti-vibration bracket according to claim 1, an anti-vibration bracket according to independent claim 12, a method of manufacturing an anti-vibration bracket according to independent claim 15, and a method of manufacturing an anti-vibration bracket according to independent claim 16. Further embodiments are described in dependent claims.

Hereinafter, a bushing for an anti-vibration bracket is described, the bushing comprising an outer structure and an inner sleeve, wherein the outer structure comprises a connecting structure, wherein the connecting structure comprises at least two blades connected to the inner sleeve, and wherein the outer structure is designed to connect to an opening of the anti-vibration bracket, wherein the inner sleeve comprises a through hole adapted to connect to an at least partially tube-shaped member, wherein the at least two blades have a helically extending structure relative to an axis of the through hole.

The bushing can be made out of a single material or out of multiple materials, in particular one or more polymer materials like plastic or rubber. The respective material or materials used are elastomeric. Such material(s) allow for a reversible displacement and reversible stretching of structural components of the bushing. A displacement of a structural part causes a dampened force in the opposite direction of the displacement, thereby effectively absorbing vibrational energy caused by a vibration exerting component held by the bushing. The bushing can be an integral component, i.e., the bushing can form a single piece.

The inner sleeve can be connected directly or indirectly to an attachment structure like a rod or a bar which itself can be connected to a motor, in particular an electric motor, a gearbox, or the like, and the connecting structure can be connected to the anti-vibration bracket which itself can be mounted to a body component or a chassis component of a vehicle or vice versa. An indirect connection to the attachment structure can be achieved by a sleeve, which itself can be made out of plastics or out of metal to allow for a rotation of the attachment structure relative to the bushing. Typically, such respective vibration exerting component held by such anti-vibration brackets, like an electric motor, is held by more than one anti-vibration brackets, so more than one respective bushing might be used to support a single vibration exerting component.

One specific use case for such bushing is a support of an electric motor of a vehicle, e.g., a fully electric or a hybrid car. Such electric motor can be any electric motor being capable of converting electric energy into rotational movement, thereby driving one or more wheels of the vehicle. Electric motors typically used for vehicle drive units may generate vibrations in the frequency range of 1 and 2000 Hz. An anti-vibration bracket utilizing such bushing can be designed such that it can dampen and absorb vibrations in the whole frequency range, thereby effectively dampening all of expected frequency range exhibited by the electric motor. The various components of an anti-vibration bracket might have different dampening characteristics, wherein the bushing typically dampens lower frequency ranges and a bracket body, in some embodiments in combination with other dampeners included in the bracket body, the higher frequency ranges exhibited by the vibration exerting component.

The blades are designed in a way that two of three dimensions are significantly larger than the third dimension, e.g., a helical blade length and a radial blade width are significantly larger than a blade thickness. The surfaces of the blades can be curved, and length, width, and thickness can vary across the blades so that the blade can be thicker in one area than in another area.

Further, due to the helically extending structure, a defined material stiffness can be achieved with the use of less material than with the use of other known connecting structures so that a respective bushing is lighter than known bushings with similar material properties. This effect can be increased by the fact that respective bushings might be designed smaller than known bushings for a given stiffness, saving even more weight. Also, due to the helical structure of the blades, another dimension of design freedom is introduced, allowing for a better adjustment of the dampening properties of the bushing for a respective use case.

Another aspect of achieving a defined material stiffness with lighter weight bushings is that the eigen mode(s) of the bushing are usually higher than in heavier bushings, meaning that the resonance frequency or frequencies can be shifted away further from such of the components directly or indirectly connected to the bushings, such that the NVH properties can be improved.

Also, the peak amplitudes of respective eigen mode(s) of the bushing can be lowered significantly vis-à-vis commonly known bushings such that the dampening properties are still decent in an eigen mode exertion.

Further, the use of helical blades can allow for a fine adjustment of different stiffness and dampening properties in different directions, e.g., axial, radial, torsional properties can depend on the helical blade design. The torsional properties might also depend on the direction of the torsional momentum introduced into the bushing.

According to a first further embodiment, the blades can directly connect to a different component, e.g., a bracket body, thereby saving weight and space.

According to another further embodiment, the outer structure comprises an outer sleeve, wherein the connecting structure is connected to the outer sleeve. Said connecting structure and said outer sleeve may be formed integral, i.e., made from a single piece of material.

That way, the bushing comprises an inner sleeve, an outer sleeve and at least two helical blades each connecting inner sleeve and outer sleeve in a single-piece configuration as a single structural unit. This provides for an integral bushing configuration. Such bushing configuration can withstand high loads before reaching failure thus allowing for more compact bushing designs.

According to another further embodiment, the connecting structure consists of the blades or at least one blade arrangement comprising blades.

This allows for a variety of usable manufacturing methods, including injection molding and additive manufacturing processes, such as 3D printing, as the blades or blade arrangements can be designed to be suitable for such processes.

According to another further embodiment, the at least two blades have a pitch within a range of 30 mm to 300 mm.

Such blade design can provide required dampening specifications while allowing for a variety of manufacturing methods such as injection molding and additive manufacturing processes, such as 3D printing. Usually, the higher the pitch, the stiffer the bushing is in radial direction and in axial direction.

According to another further embodiment, the pitch is higher than an axial extension of the bushing.

In such configuration, a respective bushing can be demolded at a certain demolding angle through a helical motion of an inner mold structure of a mold in high-speed manufacturing lines.

According to another further embodiment, the at least two blades cover a slope angle between 0° and 80°, in particular between 1° and 80°, in particular between 10° and 50°.

The slope angle of a blade can be used to adjust the ratio of radial stiffness to axial stiffness. The lower the slope angle covered, the lower the ratio of radial stiffness to axial stiffness. The slope angle can span between said axis of the through hole on the one hand and the course of the helix structure or the respective blade on the other hand. A slope angle of 0° can be regarded as a zero angle in the mathematical sense. With such a zero angle, the blades can run in the radial direction without being tilted in the circumferential direction, or the blades can run parallel to the axis of the through hole. Said slope angle particularly concerns the measure by which the blades are tilted with respect to the axis of the through hole. This causes the blades to wrap around said axis.

According to another further embodiment, the at least two blades cover a radial angle between 0° and 90°, in particular between 1° and 85°, in particular between 70° and 80°.

The radial angle of a blade can be used to easier demold said blades. This advantage is particularly evident in production by means of injection molding. The radial angle can span between said axis of the through hole on the one hand and the average course of the helix structure or the respective blade in a longitudinal section plane on the other hand. The radial angle can also lie in a longitudinal sectional plane through the bushing. The axis can also lie in said longitudinal section plane. A radial angle of 0° can be regarded as a zero angle in the mathematical sense. With such a zero angle, the blades can run in the radial direction without being tilted in the circumferential direction, or the blades can run parallel to the axis of the through hole.

According to another embodiment, each of said blades may extend over a circumferential angle range of 0° to a multiple of 360°, preferably from 0° to 270°, more preferably from 0° to 180°.

The circumferential angle can be located in a cross-sectional plane. As a result, the blades helically wind around the axis of the through hole. In this range, an optimum is achieved between the beneficial effects described above (material stiffness, use of less material, lighter bushing, similar material properties) and manufacturability. If, for example, the blades have to be demolded after production, the molded parts can be removed easily. Furthermore, said feature offers more flexibility to adjust stiffness ratio in one or more spatial directions.

If the blades are produced by injection molding, a circumferential angle in the range from 0° to 360°, preferably from 0° to 270°, more preferably from 0° to 180°, can be advantageous for easy demolding. If the blades are manufactured using additive manufacturing processes, such as 3D printing, a larger circumferential angle can also be selected, as the demoldability aspect is irrelevant there.

According to another further embodiment, the at least two blades have a path length of at least 1.1 or 1.2 times the distance between the inner sleeve and the outer sleeve or between the inner sleeve and the opening of the anti-vibration bracket.

Such arrangement allows for blades which are not extending radially outward but also for example have an angle relative to a radial direction, allowing for further fine tuning of the bushing properties, including allowing for more travel and higher vibration amplitudes.

According to another further embodiment, the number of blades is between 2 and 12.

The number of blades can determine a maximal acceptable load as well as stiffness of the bushing. A given load distributes over the blades such that the respective load per blade is reduced with a higher number of blades in a bushing.

According to another further embodiment, the blades are equally distributed around the circumference of the inner sleeve.

That way, the bushing can comprise rotational symmetry providing for more flexibility during assembly as well as for isotropic dampening properties relative to the axial direction.

According to another embodiment, the blades have an unequal distribution of blades around the circumference of the inner sleeve.

The blades can be grouped such that two or more blades are positioned with a lower distance to each other than other blades. Such arrangements of blades can be distributed equally around the circumference of the inner sleeve. That way, different radial stiffnesses can be achieved compared to non-grouped blades.

In addition, depending on the respective arrangements of unequally distributed blades, radial stiffnesses in different directions can be adjusted differently to compensate for static loads.

According to another further embodiment, the blades have smooth transition sections to the outer sleeve and/or the inner sleeve.

Smooth transition sections can significantly reduce the risk of defects of the bushing due to ruptures in high overload scenarios, as shear forces can be reduced and high peaks in material tension can be avoided. A smooth transition section can be a rounding out section.

According to another further embodiment, the blades have a curved cross-sectional shape with essentially parallel side walls along at least 50 % of their extension path.

A respective design can have multiple curved areas and be, for example, s-shaped. Curved cross-sections might allow for different dampening properties depending on the relative direction of a momentum introduced into the bushing, e.g., clockwise vs. counterclockwise.

The curved blades can be designed such that in a compression direction of the curved blades, an uncontrolled buckling of the structure can be avoided. Instead, a controlled folding of the blade structure occurs in the compression direction.

Also, the maximal amplitude can be increased through curved, in particular s-shaped, blades, allowing for either higher amplitudes in a bushing with a given dimension or a smaller dimension bushing for a given maximum amplitude specification, in particular in an extension direction opposite to the compression direction.

According to another further embodiment, the bushing is made out of a thermoplastic elastomer (TPE) or a spring element of said bushing is made out of a thermoplastic elastomer (TPE). Preferably, the bushing or the spring element is made entirely of TPE.

Thermoplastic elastomers, which are sometimes referred to as thermoplastic rubbers, are a class of copolymers or a physical mix of certain polymers that consist of materials with both thermoplastic and elastomeric properties. While most elastomers commonly used for respective bushings or spring elements are thermosets, thermoplastics are in contrast relatively easy to use in manufacturing, for example, by injection molding and additive manufacturing processes, such as 3D printing. An additional benefit of using thermoplastic elastomers is the ability to stretch to moderate elongations and return to its near original shape creating a longer life and better physical range than other materials.

Suitable TPE materials include PP-EPDM (TPE and TPE-V), PP-SEBS, TPE-U.

The use of TPEs has multiple benefits over the use of known materials such as rubber. TPE provides significant advantages in the manufacturing process. First, TPE is often times cheaper than rubber, so the cost of goods is reduced, thus leading to cheaper components. Second, TPE does not require the use of a vulcanization core, making the manufacturing cheaper. Third, TPE does not require bonding agents to form a material connection to another component such as an anti-vibration bracket body or a sleeve. Fourth, the use of TPE allows for different and more effective manufacturing methods such as 2K molding. Also, cure times can be reduced, and the processes provide for less pollution.

Further, TPE comprises benefits in the specific use case. TPE has a lower specific weight than more commonly used dampening elastomeric materials as rubber, making the bushing or spring element lighter compared to bushings or spring elements made out of common materials. Due to the low specific weight of TPE, eigen mode(s) are typically at higher frequencies where they are less problematic than at lower frequencies. Also, the eigen mode(s) can be designed such that the amplitudes can be reduced significantly due to higher dampening at the eigen mode(s).

Said spring element may comprise said inner sleeve and/or said outer structure. Said spring element can be the main spring element of the bushing and/or directly connect an outer sleeve to an inner sleeve.

Furthermore, in a surprising way, the combination of the helically extending structure on the one hand and TPE on the other creates a considerably beneficial effect. Namely, the use of TPE enables or improves a helically extending structure, so that the advantages described above are further reinforced. In particular, slender structures can be produced by means of TPE on the one hand, which on the other hand, however, do not have any functional losses.

According to another further embodiment, the bushing may comprise a core element. The core element may be located in the through hole. The core element can be an independent or separate part, especially from the spring element. The core element can be hollow-cylindrical in shape and serve to connect another element, for example a tube shape member. The inner sleeve can rest against the outer circumferential side of the core element, preferably being firmly connected to it. The core element can serve for stable connection to a further component.

It is conceivable that the bushing is formed from only two parts, namely the spring element and the core. The spring element can comprise said inner sleeve and said outer structure. The core can be attached to the spring element in a single step during manufacture or forming of the spring element. As a result, the advantages of the invention can be realized even when using a core that is known per se.

It is conceivable that the outer structure and/or the core has(have) longitudinal ribs on the circumferential side, which may run along the axis of the through hole of the bracket. It is also conceivable that longitudinal grooves for the respective longitudinal ribs are formed in the through hole of the bracket and/or in the through hole of the bushing. However, it is also conceivable that ribs and grooves are reversed on the respective other element. Such rib connections improve a tight fit of the respective element, in particular under rotational load about the axis of the through hole of the bracket.

A first independent aspect relates to an anti-vibration bracket, with a bracket body, the bracket body comprising an opening for a bushing according to the previous description, wherein the bushing is connected to the opening via the outer structure.

The bracket body can be made from one or more different materials than the bushing.

The bracket body can be made in particular out of PA, which has no elastomeric properties like the bushing itself. The bracket structure is designed to exhibit defined static and dynamic properties that, together with at least one bushing as described before, provide for an effective dampening of vibrations over a broad frequency spectrum introduced by the at least one vibration exerting component.

The bracket body can be designed light weight and stiff, e.g., through the use of stiffening structures such as stiffening walls extending in one direction or in more than one directions. Stiffening structures can cross each other to provide multi-dimensional structural stiffness.

Bracket body and at least one bushing can be designed such that they have different dampening properties that provide for a broad frequency dampening of vibrations. One part of the frequency spectrum can be absorbed by the bushing, another by the bracket body.

According to a first further embodiment, the bushing is made via overmolding the bracket body.

This way, the bushing can be bonded to the bracket body without the use of bonding agents in a single 2K molding manufacturing step.

According to another further embodiment, the bracket body comprises attachments for attaching the bracket to an object.

The bracket body can be attached to a vibration exerting component, e.g., an electric motor held by the anti-vibration bracket via, the at least one bushing, whereas the bracket body can be attached to a body part, a frame, a chassis, or the like. The latter described attachment can be accomplished via dampening materials, such as rubber or TPE sleeves to improve NVH properties of the anti-vibration bracket.

A further independent aspect relates to a method of manufacturing an anti-vibration bracket according to the previous description, the method comprises the steps of placing a bracket body in an injection mold, overmolding the bracket body with a thermoplastic elastomer (TPE) to form a bushing or a spring element of said bushing, and demolding the bracket after the thermoplastic material has sufficiently cured.

If the bushing or the spring element is directly overmolded into the bracket body, the use of bonding agents to attach the bushing to the bracket body can be avoided, reducing the number of manufacturing steps as well as materials used. Also, issues with improper bonding of the bushing to the bracket body can be reduced. Further, the attachment structures provided at the bushing can be dimensioned differently, saving space and weight compared to traditional anti-vibration brackets.

A further independent aspect relates to a method of manufacturing an anti-vibration bracket according to the previous description, the method comprising providing a two-component injection mold, injecting a first plastic material to form a bracket body, letting the first plastic material sufficiently cure, overmolding the bracket body with a thermoplastic elastomer (TPE) to form a bushing or a spring element of said bushing, and demolding the bracket after the thermoplastic material forming the bushing or the spring element of said bushing has sufficiently cured.

According to this aspect, an anti-vibration bracket can be provided in a single 2K molding process. In a first step of the 2K molding process, a mold consisting of multiple mold components can be provided to form the bracket body structure which can include one or more through holes for structures formed in a further step of the 2K molding process. A first material can be injected into a cavity formed by the mold and cured such that it is stable in shape.

Then, some of the mold components can be removed and a different mold component or set of mold components can be positioned relative to the bracket body and a TPE injected into the one or more cavities formed by the mold and the bracket body. The TPE can directly bond to the bracket body, forming a strong connection between the two materials.

The bracket body material can be selected upon its bonding capabilities with TPE. Suitable materials include short glass fiber reinforced polymers with a molding temperature below 120°C like Polyamide, Polyester, or Polypropylene. Such materials for the bracket body are particularly advantageous in combination with TPE when a dual-injection or two-component injection is to be used.

On top of the bushing, further components such as attachment structures to further components or linings can also be formed in this respective step.

According to a further embodiment of the methods described above, an inner mold forming the blades of the bushing is deformed using a spring and a helical guide groove guiding the inner mold.

That way, the demolding path for the inner mold is precisely defined and the demolding process results in less defects.

According to a further inventive aspect, it is also conceivable that an additive manufacturing process, for example 3D printing, is used as the manufacturing process instead of molding. Moreover, the features disclosed in the context of molding apply equally to the additive manufacturing process, insofar as this is technically possible.

If a range of values extends from a first value to a second value, the two limit values are also to be included in the said range.

Further features and details will be shown in the following description in which - where applicable with reference to the drawings - at least one exemplary embodiment will be described in detail. Described and/or shown features constitute the subject in itself or in any possible and meaningful combination, eventually also independent from the claims. In particular, they can be subject of one or more separate applications. The figures show schematically:
- Fig. 1: a first embodiment of an anti-vibration bracket in a three-dimensional view;
- Fig. 2: the anti-vibration bracket of Fig. 1 in an exploded three-dimensional view;
- Fig. 3: a bushing of the anti-vibration bracket of Fig. 1 in a three-dimensional view;
- Fig. 4: a frontal view of the bushing of Fig. 3;
- Fig. 5: a longitudinal section view of the bushing of Fig. 3;
- Fig. 6: a second embodiment of an anti-vibration bracket in a three-dimensional view;
- Fig. 7: the anti-vibration bracket of Fig. 6 in an exploded three-dimensional view;
- Fig. 8: a bushing of the anti-vibration bracket of Fig. 6 in a three-dimensional view;
- Fig. 9: a frontal view of the bushing of Fig. 8;
- Fig. 10: a longitudinal section view of the bushing of Fig. 8;
- Fig. 11: a third embodiment of an anti-vibration bracket in a three-dimensional view;
- Fig. 12: the anti-vibration bracket of Fig. 11 in an exploded three-dimensional view;
- Fig. 13: a bushing of the anti-vibration bracket of Fig. 11 in a three-dimensional view;
- Fig. 14: a frontal view of the bushing of Fig. 13,
- Fig. 15: a side view of the bushing of Fig. 13,
- Fig. 16: a fourth embodiment of an anti-vibration bracket in a three-dimensional view, and
- Fig. 17: the anti-vibration bracket of Fig. 16 in an exploded three-dimensional view.

To improve readability and clarity, identical or similar features or features with identical or similar properties or functions in different embodiments may be numbered with the same reference numbers.

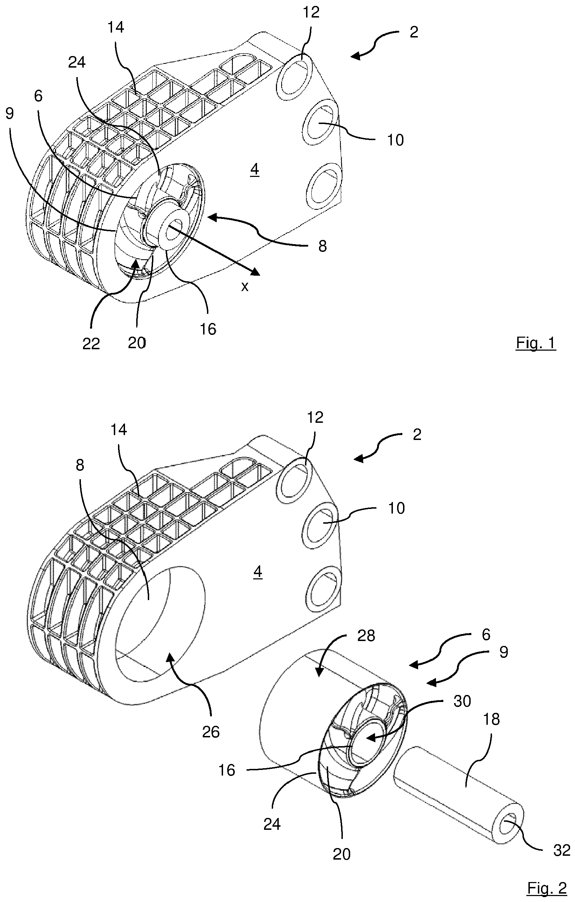

Fig. 1 shows a three-dimensional view of an anti-vibration bracket 2.

The anti-vibration bracket 2 comprises a bracket body 4 and a bushing 6. The bushing 6 is a unitary structural unit. The bushing 6 is arranged in a through hole 8 arranged generally on one side of the bracket body 4. On an opposite side of the bracket body 4, three attachment holes 10 are arranged. The bushing 6 is designed to attach to a vibration exerting component such as an electric motor of an electric vehicle. The attachment holes 10 are arranged to be attached to a structural component of a vehicle such as a frame of the vehicle using threaded bolts.

The attachment holes 10 according to the current embodiment comprise an elastomeric lining 12 that avoids low-frequency noise such as rattling caused by different vibration sources like unevenness of the roads, which are introduced into the vehicle via a suspension of the vehicle. Other embodiments might not need an additional lining depending on the circumstances.

The bracket body 4 comprises a three-dimensional shape designed to fit the respective attachment geometries of the vehicle and the vibration exerting component, e.g., electric motor. The bracket body 4 is designed to be light weight as well as strong enough to withstand static and dynamic forces exhibited during typical use scenarios of the vehicle. The bracket body 4 can be a single piece structure. The through hole 8 as well as the attachment holes 10 are surrounded by sufficient bracket body structure to absorb forces introduced via the vibration-exerting component.

To reduce weight, the bracket body 4 comprises a series of stiffening ribs 14 instead of being made out of a solid block of material. The stiffening ribs 14 extend in different directions, a number of them generally arranged perpendicular to an axis x of the bushing 6, others extending radially and/or parallel to the axis x. The stiffening ribs 14 can reinforce the various structural components of the bracket body 4.

Referring now to Figs. 1 and 2, the bushing 6 forms an inner sleeve 16 which holds a separate sleeve 18. The separate sleeve 18 is designed to accept a mounting structure of the vibration-exerting component, e.g., a respective rod attached to of formed at a respective electric motor. The sleeve 18 is made out of a material stiffer than the bushing 6 to absorb static and dynamic forces. The separate sleeve 18 is not necessary for accept a mounting structure of the vibration-exerting component. The separate sleeve 18 does not need to form part of the bushing 6, 6', 6", 6"'.

Moving radially outward, the inner sleeve 16 transitions into a number of blades 20 which are part of a connecting structure 21 which connects the inner sleeve 16 to an outer structure 22. The outer structure 22 connects the bushing 6 to the bracket body 4. A part of the outer structure 22 in the currently described embodiment is an outer sleeve 24. The outer sleeve 24 is bonded to the bracket body 4 as described below. A spring element 9 comprises said inner sleeve 16 and said outer structure 22.

In other embodiments, no outer sleeve 24 might be provided and the blades 20 might be directly connected to the bracket body's 4 through hole 8, in which case the connecting structure and the outer structure are identical.

The bracket body 4 as well as the sleeve 18 can be made out of a polymer material such as polyamide (PA) or a fiber reinforced polymer material, particularly a short fiber reinforced polymer material, here Polyamide, whereas the lining 12 as well as the bushing 6 are made out of a TPE. The anti-vibration bracket 2 is manufactured using a 2K molding process in which, in a first step, the bracket body 4 is formed out of PA and, in a second step, the bushing 6 and lining 12 are made by overmolding the bracket body 4 with TPE.

As can be seen in Fig. 2, the bracket body 4 comprises an attachment surface 26 at the through hole 8 which is used to bond an attachment surface 28 of the outer sleeve 24 of the bushing 6 to the bracket body 4 during curing of the TPE without the use of additional bonding agents.

The sleeve 18 is held in a through hole 30 formed by the inner sleeve 16 of the bushing 6. In some embodiments, the sleeve 18 can be bonded to the bushing 6, in other embodiments, the sleeve 18 can be removable and held by friction fit. The sleeve 18 comprises a bore 32 for accepting the attachment structure of the to-be-mounted vibration-exerting component.

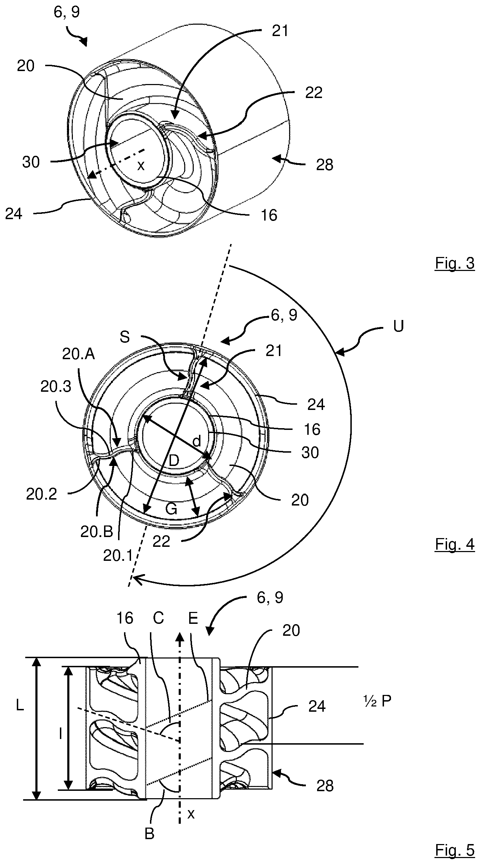

Fig. 3 shows an enlarged three-dimensional view of the bushing 6.

The bushing 6 comprises three blades 20 equally distributed around a circumference of the inner sleeve 16 so that the distance between each consecutive blade 20 is identical.

As can be seen in Figs. 3 to 5, the blades 20 extend in an s-shape from inner sleeve 16 to outer sleeve 24. The shape of the blades 20 allow for an increased maximal amplitude as well as for a defined folding instead of an undefined buckling of the blades 20 under load. The dotted line indicates the course E of the blades 20. This means that the respective course E can also be followed in the longitudinal section shown.

A distance G between inner sleeve 16 and outer sleeve 24 is defined through a respective outer diameter d of inner sleeve 16 and inner diameter D of outer sleeve 24. A path length S of the blades 20 between their respective connection points to the inner sleeve 16 and the outer sleeve 24 is longer than distance G by a factor of approx. 1.2 in the given embodiment.

Connecting sections 20.1 to the inner sleeve 16 and 20.2 to the outer sleeve 24 are rounded to create smooth transitions to the inner sleeve 16 and the outer sleeve 24, respectively, to avoid ruptures in the bushing structure due to overload.

Middle sections 20.3 in between the connecting sections 20.1 and 20.2 have mostly parallel side walls 20.A, 20.B and therefore a mostly constant material thickness to allow for an easier demolding process.

The blades 20 extend helically along axis x of the bushing 6. A helical arrangement of blades 20 compared to axially arranged blades generally provides for lower stiffnesses which allows for the use of materials which have generally stiffer elastomeric properties compared to rubber materials. The number of blades 20 and the geometric properties of the blades 20 can be used to adjust for different requirements.

Each of the blades 20 extends over a circumferential angle U of 180° in the embodiment depicted.

A pitch P of blades 20 according to the first embodiment is higher than an overall axial length L of bushing 6. This allows for an easier deforming process of a respective mold.

A slope angle B of the blade 20 relative to the axis x can be designed to determine the ratio of radial stiffness to axial stiffness. Said slope angle B particularly concerns the measure by which the blades 20 are tilted with respect to the axis x. This causes the blades 20 to wrap around the axis x. Said slope angle B is between the axis x and the course E of the blades 20. In the embodiment depicted, said slope angle B is 67°.

Each of the blades 20 has a radial angle C. Said radial angle C spans between said axis x of the through hole 8 on the one hand and the average course of the helix structure or the respective blade 20 in a longitudinal section plane on the other hand. In the embodiment depicted, said radial angle C is 72°.

The inner sleeve 16 extends longer in axial direction x than the attachment surface 28, so that an axial length I of the outer sleeve 24 is smaller than the overall axial extension L. The blades 20 therefore transition in a conical shape from the inner sleeve 16 to the outer sleeve 24.

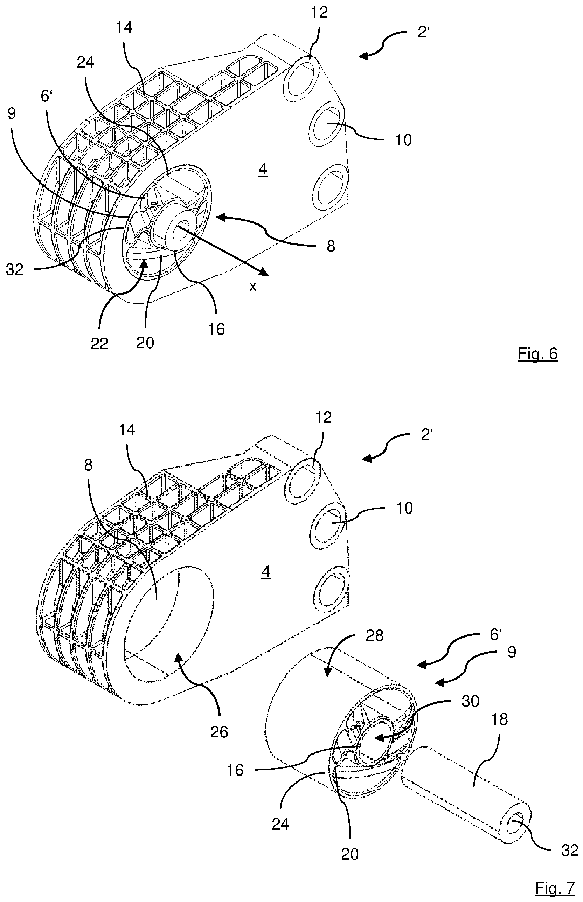

Figs. 6 to 10 show a second embodiment of an anti-vibration bracket 2'.

The anti-vibration bracket 2' shown in Fig. 6 comprises a bracket body 4 and a bushing 6'. The bushing 6 is a unitary structural unit. The bushing 6' is arranged in a through hole 8 arranged generally on one side of the bracket body 4. On an opposite side of the bracket body 4, three attachment holes 10 are arranged. The bushing 6' is designed to attach to a vibration exerting component such as an electric motor of an electric vehicle.

The attachment holes 10 according to the current embodiment are arranged to be attached to a structural component of a vehicle such as a frame of the vehicle using threaded bolts. The attachment holes 10 comprise an elastomeric lining 12 that avoids low-frequency noise such as rattling caused by different vibration sources like unevenness of the roads, which are introduced into the vehicle via a suspension of the vehicle. Other embodiments might not need an additional lining depending on the circumstances.

The bracket body 4 comprises a three-dimensional shape designed to fit the respective attachment geometries of the vehicle and the vibration exerting component, e.g., electric motor. The bracket body 4 is designed to be light weight as well as strong enough to withstand static and dynamic forces exhibited during typical use scenarios of the vehicle. The bracket body 4 can be a single piece structure. The through hole 8 as well as the attachment holes 10 are surrounded by sufficient bracket body structure to absorb forces introduced via the vibration-exerting component.

To reduce weight, the bracket body 4 comprises a series of stiffening ribs 14 instead of being made out of a solid block of material. The stiffening ribs 14 extend in different directions, a number of them generally arranged perpendicular to an axis x of the bushing 6, others extending radially and/or parallel to the axis x. The stiffening ribs 14 can reinforce the various structural components of the bracket body 4.

Referring now to Figs. 6 and 7, the bushing 6' forms an inner sleeve 16 which holds a separate sleeve 18. The separate sleeve 18 is designed to accept a mounting structure of the vibration-exerting component, e.g., a respective rod attached to of formed at a respective electric motor. The sleeve 18 is made out of a material stiffer than the bushing 6 to absorb static and dynamic forces.

Moving radially outward, the inner sleeve 16 transitions into a number of blades 20 which are part of a connecting structure 21 which connects the inner sleeve 16 to an outer structure 22. The outer structure 22 connects the bushing 6' to the bracket body 4. A part of the outer structure 22 in the currently described embodiment is an outer sleeve 24. The outer sleeve 24 is bonded to the bracket body 4 as described below. A spring element 9 comprises said inner sleeve 16 and said outer structure 22.

In other embodiments, no outer sleeve 24 might be provided and the blades 20 might be directly connected to the bracket body's 4 through hole 8, in which case the connecting structure and the outer structure are identical.

The bracket body 4 as well as the sleeve 18 can be made out of a polymer material such as polyamide (PA) or a fiber, particularly a short fiber reinforced polymer material, here Polyamide, whereas the lining 12 as well as the bushing 6 are made out of a TPE. The anti-vibration bracket 2 is manufactured using a 2K molding process in which, in a first step, the bracket body 4 is formed out of PA and, in a second step, the bushing 6 and lining 12 are made by overmolding the bracket body 4 with TPE.

As can be seen in Fig. 7, the bracket body 4 comprises an attachment surface 26 at the through hole 8 which is used to bond an attachment surface 28 of the outer sleeve 24 of the bushing 6' to the bracket body 4 during curing of the TPE without the use of additional bonding agents.

The sleeve 18 is held in a through hole 30 formed by the inner sleeve 16 of the bushing 6'. In some embodiments, the sleeve 18 can be bonded to the bushing 6', in other embodiments, the sleeve 18 can be removable and held by friction fit. The sleeve 18 comprises a bore 32 for accepting the attachment structure of the to-be-mounted vibration-exerting component.

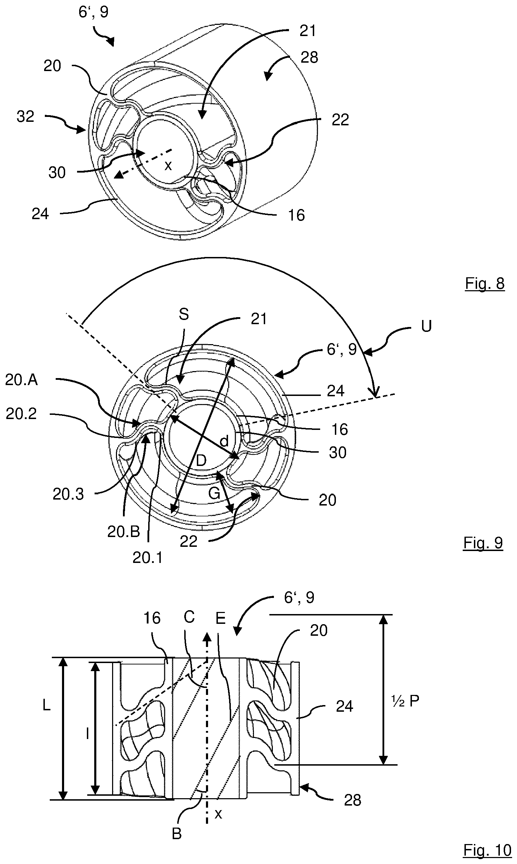

Fig. 8 shows an enlarged three-dimensional view of the bushing 6'.

The bushing 6' comprises two pairs of blade arrangements 32. Each blade arrangement 32 consists of two blades 20 arranged adjacent to each other. The blade arrangements 32 themselves are arranged equally distributed around the circumference of inner sleeve 16. Blade arrangements 32 instead of individual blades can be used for achieving different radial stiffnesses compared to individual blades.

As can be seen in Figs. 8 to 10, the blades 20 extend in an s-shape from inner sleeve 16 to outer sleeve 24. The shape of the blades 20 allow for an increased maximal amplitude as well as for a defined folding instead of an undefined buckling of the blades 20 under load.

A distance G between inner sleeve 16 and outer sleeve 24 is defined through a respective outer diameter d of inner sleeve 16 and inner diameter D of outer sleeve 24. A path length S of the blades 20 between their respective connection points to the inner sleeve 16 and the outer sleeve 24 is longer than distance G by a factor of approx. 1.2 in the given embodiment.

Connecting sections 20.1 to the inner sleeve 16 and 20.2 to the outer sleeve 24 are rounded to create smooth transitions to the inner sleeve 16 and the outer sleeve 24, respectively, to avoid ruptures in the bushing structure due to overload. Middle sections 20.3 in between the connecting sections 20.1 and 20.2 have mostly parallel side walls 20.A, 20.B and therefore a mostly constant material thickness to allow for an easier demolding process.

The blades 20 extend helically along axis x of the bushing 6'. A helical arrangement of blades 20 compared to axially arranged blades generally provides for lower stiffnesses which allows for the use of materials which have generally stiffer elastomeric properties compared to rubber materials. The number of blades 20 and the geometric properties of the blades 20 can be used to adjust for different requirements.

Each of the blades 20 extends over a circumferential angle U of 120° in the embodiment depicted.

A pitch P of blades 20 according to the first embodiment is higher than an overall axial length L of bushing 6'. This allows for an easier deforming process of a respective mold.

A slope angle B of the blade 20 relative to the axis x can be designed to determine the ratio of radial stiffness to axial stiffness. Said slope angle B particularly concerns the measure by which the blades 20 are tilted with respect to the axis x. This causes the blades 20 to wrap around the axis x. Said slope angle B is between the axis x and the course E of the blades 20. In the embodiment depicted, said slope angle B is 28°.

Each of the blades 20 has a radial angle C. Said radial angle C spans between said axis x of the through hole 8 on the one hand and the average course of the helix structure or the respective blade 20 in a longitudinal section plane on the other hand. In the embodiment depicted, said radial angle C is 35°.

The inner sleeve 16 extends longer in axial direction x than the attachment surface 28, so that an axial length I of the outer sleeve 24 is smaller than the overall axial extension L. The blades 20 therefore transition in a conical shape from the inner sleeve 16 to the outer sleeve 24.

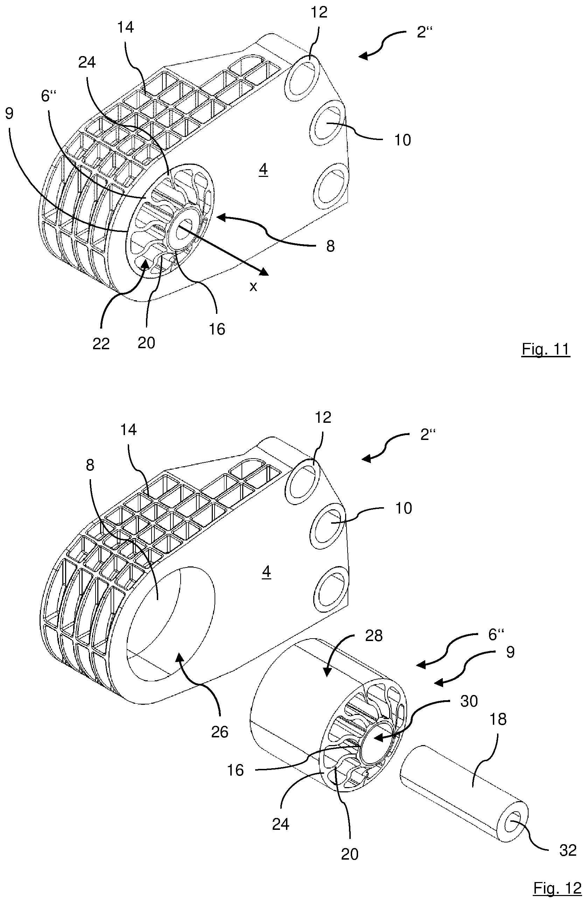

Figs. 11 to 15 show a third embodiment of an anti-vibration bracket 2".

The anti-vibration bracket 2" shown in Fig. 11 comprises a bracket body 4 and a bushing 6". The bushing 6" is a unitary structural unit. The bushing 6" is arranged in a through hole 8 arranged generally on one side of the bracket body 4. On an opposite side of the bracket body 4, three attachment holes 10 are arranged. The bushing 6" is designed to attach to a vibration exerting component such as an electric motor of an electric vehicle. The attachment holes 10 are arranged to be attached to a structural component of a vehicle such as a frame of the vehicle using threaded bolts.

The attachment holes 10 according to the current embodiment comprise an elastomeric lining 12 that avoids low-frequency noise such as rattling caused by different vibration sources like unevenness of the roads, which are introduced into the vehicle via a suspension of the vehicle. Other embodiments might not need an additional lining depending on the circumstances.

The bracket body 4 comprises a three-dimensional shape designed to fit the respective attachment geometries of the vehicle and the vibration exerting component, e.g., electric motor. The bracket body 4 is designed to be light weight as well as strong enough to withstand static and dynamic forces exhibited during typical use scenarios of the vehicle. The bracket body 4 can be a single piece structure. The through hole 8 as well as the attachment holes 10 are surrounded by sufficient bracket body structure to absorb forces introduced via the vibration-exerting component.

To reduce weight, the bracket body 4 comprises a series of stiffening ribs 14 instead of being made out of a solid block of material. The stiffening ribs 14 extend in different directions, a number of them generally arranged perpendicular to an axis x of the bushing 6, others extending radially and/or parallel to the axis x. The stiffening ribs 14 can reinforce the various structural components of the bracket body 4.

Referring now to Figs. 11 and 12, the bushing 6" forms an inner sleeve 16 which holds a separate sleeve 18. The separate sleeve 18 is designed to accept a mounting structure of the vibration-exerting component, e.g., a respective rod attached to of formed at a respective electric motor. The sleeve 18 is made out of a material stiffer than the bushing 6 to absorb static and dynamic forces.

Moving radially outward, the inner sleeve 16 transitions into a number of blades 20 which are part of a connecting structure 21 which connects the inner sleeve 16 to an outer structure 22. The outer structure 22 connects the bushing 6" to the bracket body 4. A further part of the connecting outer structure 22 in the currently described embodiment is an outer sleeve 24. The outer sleeve 24 is bonded to the bracket body 4 as described below. A spring element 9 comprises said inner sleeve 16 and said outer structure 22.

In other embodiments, no outer sleeve 24 might be provided and the blades 20 might be directly connected to the bracket body's 4 through hole 8, in which case the connecting structure and the outer structure are identical.

The bracket body 4 as well as the sleeve 18 can be made out of a polymer material such as polyamide (PA) or a fiber, particularly a short fiber reinforced polymer material, here Polyamide, whereas the lining 12 as well as the bushing 6 are made out of a TPE. The anti-vibration bracket 2 is manufactured using a 2K molding process in which, in a first step, the bracket body 4 is formed out of PA and, in a second step, the bushing 6 and lining 12 are made by overmolding the bracket body 4 with TPE.

As can be seen in Fig. 12, the bracket body 4 comprises an attachment surface 26 at the through hole 8 which is used to bond an attachment surface 28 of the outer sleeve 24 of the bushing 6" to the bracket body 4 during curing of the TPE without the use of additional bonding agents.

The sleeve 18 is held in a through hole 30 formed by the inner sleeve 16 of the bushing 6". In some embodiments, the sleeve 18 can be bonded to the bushing 6", in other embodiments, the sleeve 18 can be removable and held by friction fit. The sleeve 18 comprises a bore 32 for accepting the attachment structure of the to-be-mounted vibration-exerting component.

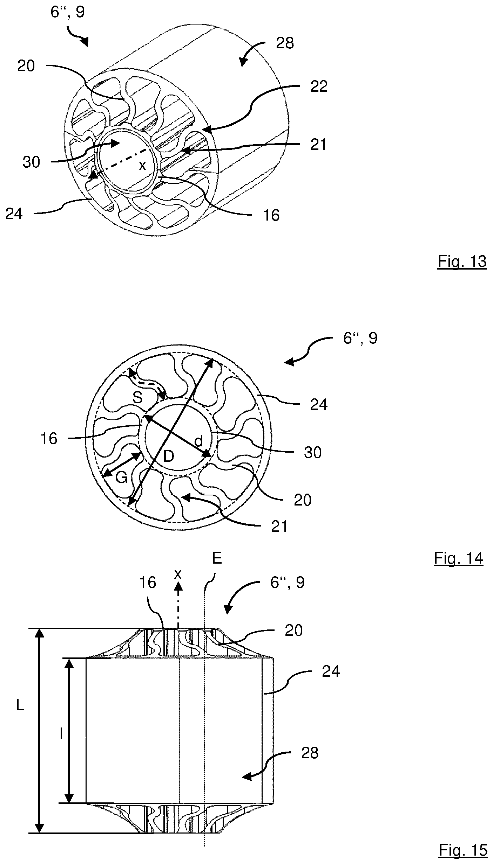

Fig. 13 shows an enlarged three-dimensional view of the bushing 6".

The bushing 6" comprises ten blades 20. The blades 20 are arranged equally distributed around the circumference of inner sleeve 16 and extend radially outward. The relatively high number of blades 20 increases the maximum allowable forces the bushing 6" can absorb.

As can be seen in Figs. 13 to 15, the blades 20 extend in an s-shape from inner sleeve 16 to outer sleeve 24. The shape of the blades 20 allow for an increased maximal amplitude as well as for a defined folding instead of an undefined buckling of the blades 20 under load.

A distance G between inner sleeve 16 and outer sleeve 24 is defined through a respective outer diameter d of inner sleeve 16 and inner diameter D of outer sleeve 24. A path length S of the blades 20 between their respective connection points to the inner sleeve 16 and the outer sleeve 24 is longer than distance G by a factor of approx. 1.2 in the given embodiment.

Connecting sections 20.1 to the inner sleeve 16 and 20.2 to the outer sleeve 24 are rounded to create smooth transitions to the inner sleeve 16 and the outer sleeve 24, respectively, to avoid ruptures in the bushing structure due to overload. Middle sections 20.3 in between the connecting sections 20.1 and 20.2 have mostly parallel side walls 20.A, 20.B and therefore a mostly constant material thickness to allow for an easier demolding process.

The inner sleeve 16 extends longer in axial direction x than the attachment surface 28, so that an axial length I of the outer sleeve 24 is smaller than the overall axial extension L. The blades 20 therefore transition in a conical shape from the inner sleeve 16 to the outer sleeve 24.

As can be seen from a synopsis of Figures 13 to 15, the blades 20 have a course E. Said course E or the associated line is parallel to said axis x. The course E or the corresponding line runs parallel to the axis x. A so-called zero angle is located between the axis x and the course E.

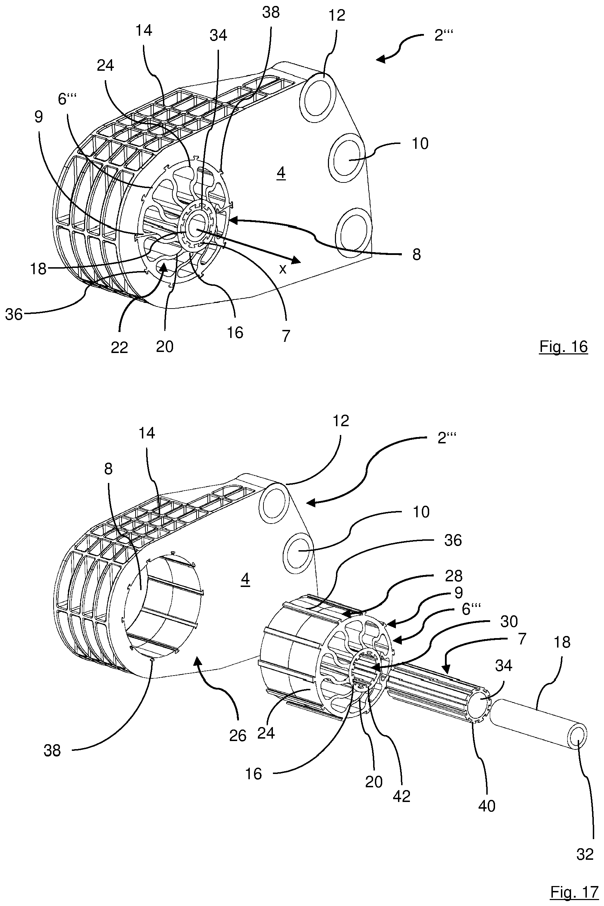

Figs. 16 and 17 show a fourth embodiment of an anti-vibration bracket 2"'.

To avoid repetition, only the differences between Figures 16 and 17 on the one hand and Figures 11 to 15 on the other hand will be described.

The bushing 6'" comprises a core element 7 located in the through hole 30 and extending in the direction of the axis x. The core element 7 is a separate component with respect to the spring element 9 and is hollow-cylindrical in shape and serve. The sleeve 18 is held in a through hole 34 formed by the core 7 of the bushing 6"'. In some embodiments, the sleeve 18 can be bonded to the core 7, in other embodiments, the sleeve 18 can be removable and held by friction fit. The inner sleeve 16 can rest against the outer circumferential side of the core element 7, preferably being firmly connected to it.

As can be seen, the outer structure 22 has longitudinal ribs 36 on the circumferential side extending along the axis x. Correspondingly, the through hole 8 of the bracket 4 has longitudinal grooves 38 for the respective longitudinal ribs 36. Furthermore, said core 7 has longitudinal ribs 40 on the circumferential side extending along the axis x. Correspondingly, the through hole 30 has longitudinal grooves 42 for the respective longitudinal ribs 40.

While at least one exemplary embodiment has been presented in the foregoing summary and detailed description as well as the claims, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

Any feature disclosed in the claims, the description, and the drawings, including constructive details, relative positioning or method steps can be relevant to the invention taken in isolation or in any meaningful combination with any other feature(s).

In order to avoid repetitions, features disclosed according to the bushing/bracket shall be considered as disclosed according to the method and shall be claimable. Similarly, features disclosed according to the method should also be considered disclosed according to the bushing/bracket and be claimable. By means of the disclosed method, the disclosed bushing and/or the disclosed bracket can be manufactured.

### List of reference numbers

- 2, 2', 2",2"': Anti-vibration bracket
- 4: Bracket body
- 6, 6', 6",6"': Bushing
- 7: core element
- 8: Through hole
- 9: spring element
- 10: Attachment hole
- 12: Lining
- 14: Stiffening ribs
- 16: Inner sleeve
- 18: Sleeve
- 20: Blade
- 20.1, 20.2: Connecting section
- 20.3: Middle section
- 20.A, 20.B: Side wall
- 21: Connecting structure
- 22: Outer structure
- 24: Outer sleeve
- 26: Attachment surface
- 28: Attachment surface
- 30: Through hole
- 32: Blade arrangement
- 34: Through hole
- 36: longitudinal rib
- 38: longitudinal groove
- 40: longitudinal rib
- 42: longitudinal groove

- B: Slope angle
- C: Radial angle
- d: Outer diameter of inner sleeve
- D: Inner diameter of outer sleeve
- E: Course

- G: Distance inner sleeve to outer sleeve
- I: Axial length of attachment surface
- L: Overall axial length of bushing
- P: Pitch
- S: Path length
- U: Circumferential angle
- x: Axis

## Claims

1. Bushing for an anti-vibration bracket (2; 2'; 2"; 2"'), the bushing (6; 6'; 6"; 6"') comprising an outer structure (22) and an inner sleeve (16), wherein the outer structure (22) comprises a connecting structure (21), wherein the connecting structure (21) comprises at least two blades (20) connected to the inner sleeve (16), and wherein the outer structure (22) is designed to connect to an opening (8) of the anti-vibration bracket (2; 2'; 2"; 2"'), wherein the inner sleeve (16) comprises a through hole (30) adapted to connect to an at least partially tube-shaped member (18), wherein the at least two blades (20) have a helically extending structure relative to an axis (x) of the through hole (30).

2. Bushing according to claim 1, wherein the outer structure (22) comprises an outer sleeve (24), wherein the connecting structure (21) is connected to the outer sleeve (24).

3. Bushing according to claim 1 or 2, wherein the connecting structure consists of the blades (20) or at least one blade arrangement (32) comprising blades (20).

4. Bushing according to any of the preceding claims, wherein the at least two blades (20) have a pitch (P) within a range of 30 mm to 300 mm.

5. Bushing according to any of the preceding claims, wherein the at least two blades (20) cover a slope angle (B) between 0° and 80°, in particular between 1° and 80°, in particular between 10° and 50°.

6. Bushing according to any of the preceding claims, wherein the at least two blades (20) have a path length (S) of at least 1.1 times the distance (G) between the inner sleeve (16) and the outer sleeve (24) or between the inner sleeve (16) and the opening (8) of the anti-vibration bracket (2; 2'; 2"; 2"').

7. Bushing according to any of the preceding claims, wherein the number of blades (20) is between 2 and 12.

8. Bushing according to any of the preceding claims, wherein the blades (20) are equally distributed around the circumference of the inner sleeve (16), or wherein the blades (20) have an unequal distribution of blades (20) around the circumference of the inner sleeve (16).

9. Bushing according to any of the preceding claims, wherein the blades (20) have smooth transition sections (20.1, 20.2) to the outer sleeve (24) and/or the inner sleeve (16).

10. Bushing according to any of the preceding claims, wherein the blades (20) have a curved cross-sectional shape with essentially parallel side walls (20.A, 20.B) along at least 50 % of their extension path.

11. Bushing according to any of the preceding claims, wherein the bushing (6; 6'; 6"; 6"') is made out of a thermoplastic elastomer (TPE) or a spring element (9) of said bushing (6; 6'; 6") is made out of a thermoplastic elastomer (TPE).

12. Anti-vibration bracket, with a bracket body (4), the bracket body (4) comprising an opening (8) for a bushing (6; 6'; 6"; 6"') according to any of the preceding claims, wherein the bushing (6; 6'; 6"; 6"') is connected to the opening (8) via the outer structure (22).

13. Anti-vibration bracket according to claim 12, wherein the bushing (6; 6'; 6") is made via overmolding the bracket body (4).

14. Anti-vibration bracket according to claim 12 or 13, wherein the bracket body (4) comprises attachments (10) for attaching the bracket (2; 2'; 2"; 2"') to an object.

15. Method of manufacturing an anti-vibration bracket (2; 2'; 2"; 2"') according to any of claims 12 to 14, the method comprises the steps of placing a bracket body (4) in an injection mold, overmolding the bracket body (4) with a thermoplastic elastomer (TPE) to form a bushing (6; 6'; 6"; 6"') or a spring element (9) of said bushing (6; 6'; 6"; 6"'), and de-molding the bracket (2; 2'; 2"; 2"') after the thermoplastic material has sufficiently cured.

16. Method of manufacturing an anti-vibration bracket (2; 2'; 2"; 2"') according to any of claims 12 to 15, the method comprising providing a two-component injection mold, injecting a first plastic material to form a bracket body (4), letting the first plastic material sufficiently cure, overmolding the bracket body (4) with a thermoplastic elastomer (TPE) to form a bushing (6; 6'; 6") or a spring element (9) of said bushing (6; 6'; 6"; 6"'), and de-molding the bracket (2; 2'; 2"; 2"') after the thermoplastic material forming the bushing (6; 6'; 6"; 6"') or the spring element (9) of said bushing (6; 6'; 6"; 6"') has sufficiently cured.

17. Method according to claim 15 or 16, wherein an inner mold forming the blades (20) of the bushing (6; 6'; 6"; 6"') is deformed using a spring and a helical guide groove guiding the inner mold.
